# FASCICULE DE BREVET EUROPEEN

(11) **EP 2 946 244 B1**
(45) Date de publication et mention de la délivrance du brevet: **05.10.2016**
(21) Numéro de dépôt: 14701161.3
(22) Date de dépôt: 15.01.2014
(51) Int. Cl.: G02C 5/14, G02C 5/22

(54) **MONTURE DE LUNETTES À CHARNIÈRES TÉLESCOPIQUES À RESSORT DÉPORTÉ ET RÉGLABLE, MONTÉ DANS UN EMBOUT ROTATIF**
BRILLENFASSUNG MIT TELESKOPISCHEN SCHARNIEREN MIT EINSTELLBARER VERSETZTER FEDER IN EINEM ROTIERENDEN ENDSTÜCK
SPECTACLE FRAME HAVING TELESCOPIC HINGES WITH AN ADJUSTABLE OFFSET SPRING, MOUNTED IN A ROTARY END PIECE

(30) Priorité: 17.01.2013 FR 1350423
(43) Date de publication de la demande: 25.11.2015
(73) Titulaire: Chêne, Richard, 92200 Neuilly (FR); Delamour, Dominique, 78490 Les Mesnuls (FR); Miklitarian, Alain, 75014 Paris (FR)
(72) Inventeur: Chêne, Richard, 92200 Neuilly (FR); Delamour, Dominique, 78490 Les Mesnuls (FR); Miklitarian, Alain, 75014 Paris (FR)
(74) Mandataire: Office Kirkpatrick
(86) Numéro de dépôt international: PCT/EP2014/050703
(87) Numéro de publication internationale: WO 2014/111422

(56) Documents cités:
- WO-A1-98/33087
- WO-A1-2012/004405
- DE-A1- 10 247 604
- FR-A1- 2 275 791
- FR-A1- 2 517 080
- FR-A1- 2 854 472
- GB-A- 424 486
- US-B1- 6 381 807

## Description

Le domaine de l'invention est celui des montures de lunettes.

Une monture de lunettes comporte une face avant et deux branches montées articulées chacune sur un tenon latéral de la face avant par l'intermédiaire d'une charnière.

En position d'ouverture, une branche de lunettes s'étend sensiblement à angle droit du plan général de la face avant.

Une charnière télescopique permet d'ouvrir la branche au-delà de cet angle droit. Elle assure grâce à cette « sur-ouverture » un plus grand confort quand la monture est chaussée sur le nez et elle évite le risque de casser ou déformer la monture et les branches.

Une charnière télescopique de monture de lunettes comporte généralement un ressort qui plaque la branche contre la tête mais autorise précisément la sur-ouverture.

Une charnière télescopique comporte généralement deux éléments assemblés sur un axe d'articulation et solidaires respectivement d'un tenon de face avant (élément de face) et d'une branche (élément de branche), plus particulièrement de la soie de la branche qui est l'âme sur laquelle elle est formée, quand cette âme ne forme pas la branche à elle seule. Il se peut également que la charnière soit fixée directement à la branche, même quand elle est pourvue d'une soie, la fixation s'opérant sur l'extrémité de la branche qu'on appelle également tenon de branche.

L'élément de branche solidaire de la branche comporte une coulisse montée, d'une part, sur l'axe d'articulation et, d'autre part, dans un fourreau solidaire de l'âme ou de la branche elle-même. Le coulissement de la coulisse dans le fourreau s'effectue contre et sous l'action d'un ressort, généralement de compression, s'étendant également dans le fourreau.

Dans les montures du type rappelé ci-dessus, les charnières de branche, du fait de la présence du ressort, sont donc assez volumineuses et lourdes. De surcroît, et toujours de ce fait, les branches, au niveau des charnières, sont assez épaisses. Tout cela contribue à alourdir les montures dans la région de la face avant, ce qui n'est pas un gage de confort, notamment pour le nez des utilisateurs qui devient marqué par le pont qui réunit les deux parties de face avant supportant les verres.

On connaît, par le brevet FR 2962560, une monture de lunettes comportant une face avant prolongée par deux tenons latéraux et deux branches articulées sur les tenons autour d'axes d'articulation de deux charnières télescopiques, chacune, à un élément de face avant solidaire d'un tenon et un élément de branche, solidaire d'une branche, l'élément de branche d'une charnière comportant une coulisse articulée sur l'élément de face avant et montée coulissante dans un fourreau contre et sous l'action d'au moins un ressort, la coulisse d'une charnière de branche s'étendant jusqu'à l'extrémité libre de la branche de forme tubulaire et ménageant ledit fourreau, un manchon, monté sur la coulisse, étant monté coulissant dans l'extrémité de la branche dans laquelle s'étend également ledit ressort pour qu'il coopère avec le manchon.

Avec une telle monture de lunettes, le ressort de charnière étant déporté dans l'extrémité libre de la branche, une partie de la masse qui se trouvait à l'avant, dans la charnière, est transférée à l'arrière, dans l'extrémité de la branche, ce qui allège le nez de l'utilisateur et améliore le confort.

Pour régler la tension du ressort - ressort de charnière devenu ressort de branche -, il est nécessaire de faire appel à un opticien disposant de l'outil approprié à cet effet, à moins que le porteur de la monture en dispose d'un. En tout état de cause, un outil séparé est indispensable.

Le problème que se sont posé les demandeurs est de permettre au porteur de la monture de régler lui-même la tension du ressort et sans l'aide d'un quelconque outil.

À cet effet, l'invention concerne une monture de lunettes telle que définie dans la revendication 1, caractérisé par le fait que la branche est réalisée en deux parties distinctes, dont une partie principale et une partie d'extrémité formant embout dans lequel est disposé le ressort, la coulisse s'étendant jusque dans l'embout qui est monté rotatif par rapport à la partie principale de branche pour régler la tension du ressort.

Ainsi, grâce à l'invention, le porteur de la monture de lunettes peut la régler au gré de ses attentes ou de ses activités, en tendant ou détendant le ressort à sa convenance par rotation de l'embout.

On notera que l'embout de branche peut avoir la forme d'une spatule, comme c'est souvent le cas d'une extrémité de branche.

Les deux parties de branche étant distinctes, ne serait-ce que pour des raisons de précision de fabrication, elles sont écartées l'une de l'autre.

Les demandeurs se sont astreints à maintenir l'écartement des deux parties de branche aussi faible et constant que possible. En effet, en voulant éviter que la rotation de l'embout n'élargisse ou ne réduise cet écartement, le porteur de la monture évite le risque d'y coincer ses cheveux. L'encrassement de l'espace entre les deux parties est également évité de cette manière.

Ainsi, les deux parties de branche de la monture de l'invention sont de préférence toutes deux montées sur un même noyau intermédiaire fixe en translation, par rapport à partie de branche principale, dans la partie de branche principale, l'embout étant monté libre en rotation sur le noyau lui servant de butée en translation.

De préférence, une bague, disposée dans l'embout duquel elle est solidaire en rotation et en translation, vient en appui contre le noyau, le manchon, monté coulissant en translation dans l'embout, étant également agencé, pour coulisser en translation sur la bague.

Dans la forme de réalisation préférée de la monture de l'invention, le ressort est logé dans le manchon, en appui contre le fond d'un alésage ménagé dans le manchon, d'une part, et contre la bague, d'autre part, le manchon et la coulisse, traversant le noyau, la bague et le ressort, coopérant par vissage.

Ainsi, et pour bien fixer la compréhension, quand on tourne l'embout, le manchon tourne également, par exemple pour se visser sur la coulisse, le manchon tourne sur la bague tout en se déplaçant en translation sur elle, pour se rapprocher de la partie principale de branche, ce qui comprime le ressort, mais sans pour autant que l'embout ne se rapproche de la partie de branche principale du fait que la bague est en butée contre le noyau.

Le manchon étant de préférence monté coulissant dans l'embout, il peut être agencé pour coulisser le long d'au moins une rainure ou d'une nervure de l'embout ou de la bague.

Dans une variante de réalisation de la monture de l'invention, au lieu que la coulisse traverse un unique ressort de réglage, il est prévu deux ressorts de réglage s'étendant de part et d'autre de la coulisse, pour augmenter la force de réglage.

L'invention sera mieux comprise à l'aide de la description suivante de plusieurs formes de réalisation de la monture, en référence au dessin en annexe, sur lequel
- la figure 1 est une vue en perspective de dessus d'une monture de lunettes classique ;
- la figure 2 est une vue en coupe d'une des branches de la monture de l'art antérieur duquel sont partis les demandeurs pour proposer leur invention ;
- la figure 3 est une vue en coupe des deux parties de branche d'une des branches de la monture de l'invention ;
- la figure 4 est une vue analogue à celle de la figure 3, avant de faire tourner l'embout d'extrémité par rapport à la partie principale de branche ;
- la figure 5 est une vue en perspective et par transparence des deux parties de branche d'une des branches d'une variante de réalisation de la monture de l'invention et la
- la figure 6 est une vue en perspective et par transparence de l'embout d'extrémité d'une des branches d'une deuxième variante de réalisation de la monture de l'invention.

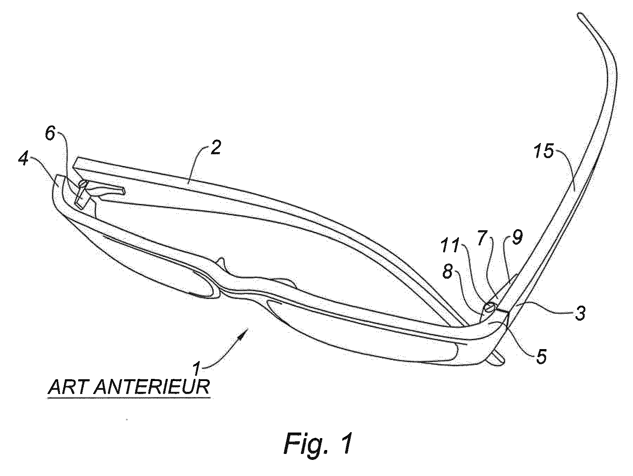

Une monture de lunettes classique de l'art antérieur comporte, en référence à la figure 1, une face avant 1 destinée à recevoir des verres généralement optiques, et une branche droite 2 et une branche gauche 3, dans l'exemple représenté, celle-ci 2 rabattue contre l'arrière de la face avant 1 en position de fermeture et celle-là 3, en position d'ouverture sensiblement perpendiculaire au plan général de la face avant 1. La face avant 1 se prolonge latéralement, sensiblement à angle droit, par deux tenons latéraux de face avant 4, 5 sur lesquels sont articulés les branches 2, 3 par l'intermédiaire de deux charnières 6, 7, ici, des charnières dites télescopiques.

Une charnière télescopique - soit par exemple la charnière gauche 7 - comporte un élément de face avant 8, solidaire du tenon de face avant 5, et un élément de branche 9, solidaire de la branche 3 et, plus précisément ici, de l'âme 15 de cette branche sur laquelle elle est formée. Les deux éléments de charnière sont articulés sur un axe d'articulation 11 solidaire de l'élément de face avant 8.

Les charnières 6, 7 des deux branches 2, 3 sont identiques.

Cela exposé, on va maintenant aborder les branches de la monture perfectionnée par l'invention de la présente demande.

Les deux branches sont toujours identiques.

Une branche 15 est articulée, à une extrémité, sur un tenon latéral de la face avant par l'intermédiaire d'une charnière 20 dite encore télescopique comportant un élément de face avant 21, solidaire du tenon, et un élément de branche 22 solidaire de la branche 15 comportant une coulisse 23 articulée sur l'élément de face avant 21, autour d'un axe d'articulation 24, et montée coulissante dans un fourreau 25 ménagé dans la branche 15 qui est donc tubulaire.

La coulisse se déplace dans le fourreau 25 contre et sous l'action d'un ressort 26 disposé à l'autre extrémité 28 de la branche, dite extrémité libre, dans une portion élargie 27 du fourreau 25.

L'extrémité 29 de la coulisse 23 est filetée et vissée dans un manchon taraudé 30 obturant le fourreau 25, 27 qui s'étend jusqu'au bord de l'extrémité de branche 28 obturée par un bouchon enjoliveur 31.

Le manchon 30 est amovible et permet donc de placer un ressort 26 approprié et adapté à l'usage projeté en fonction de sa force. Accessible, le ressort 26 peut être remplacé. Le ressort 26, qui est un ressort de compression, est donc logé dans la partie élargie 27 du fourreau 25 en appui par ses deux extrémités sur le fond 32 de cette partie élargie, d'une part, et sur la face d'extrémité 33, tournée vers l'intérieur, du manchon 30.

Lors du pivotement de fermeture de la branche ou de sur-ouverture, la coulisse 23 est entraînée dans le fourreau 25 dans la direction de l'extrémité libre 28 de la branche vers la charnière 20. La coulisse 23, dans son déplacement, entraîne avec elle le manchon 30 qui comprime le ressort 26.

À l'état de repos, branche fermée ou ouverte, le ressort 26 est détendu, après coulissement de la coulisse 23 dans l'autre direction sous l'action du ressort 26.

On remarquera que l'extrémité 34 de la coulisse 23 disposée dans la charnière est en forme de crochet, ou d'oeillet, pour pouvoir tourner autour de l'axe d'articulation 24.

La tension du ressort 26 n'est pas réglable par le porteur de la monture.

La monture de l'invention qui va maintenant être décrite, dans ses diverses formes de réalisation, a un ou plusieurs ressorts de réglage, va permettre à son porteur de régler lui-même cette tension.

Chaque branche de la monture de la figure 1 est en deux parties, une partie principale 115 et, la prolongeant au-delà de son extrémité postérieure 116 tout en étant écartée, un embout 117.

Dans certaines formes de réalisation de la monture, cet embout peut présenter la forme d'une spatule.

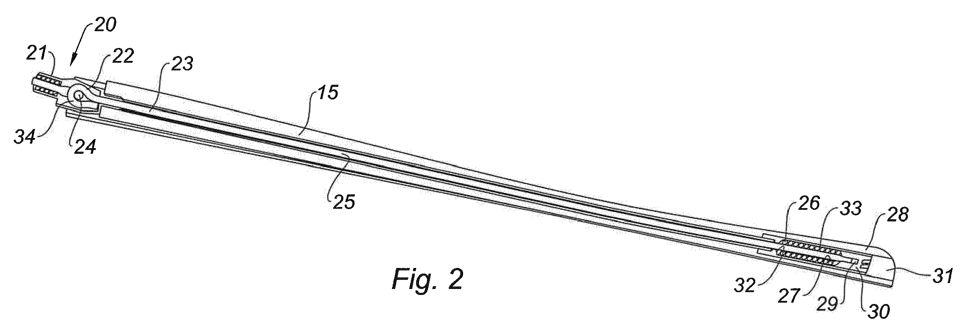

L'extrémité antérieure de la partie de branche principale 115 est tout à fait similaire, fonctionnellement et structurellement, à l'extrémité antérieure des branches 15 de la monture de la figure 2.

Un fourreau 125 est ménagé dans la partie de branche principale 115 et une coulisse 123 y est montée coulissante. La coulisse 123 s'étend également dans l'embout 117, au-delà de l'extrémité postérieure 116 de la partie de branche principale 115. L'extrémité 118 de la coulisse 123 est filetée. Elle est vissée dans un manchon 130 taraudé à cet effet.

Le manchon 130 comporte, à l'arrière, un fût cylindrique 131, qui est donc taraudé, prolongé, à l'avant, par une jupe annulaire 132. Le manchon 130 est logé dans un alésage central traversant 133 ménagé dans l'embout 117. À son extrémité postérieure 134, l'alésage 133 de l'embout 117 est obturé par un bouchon enjoliveur 135.

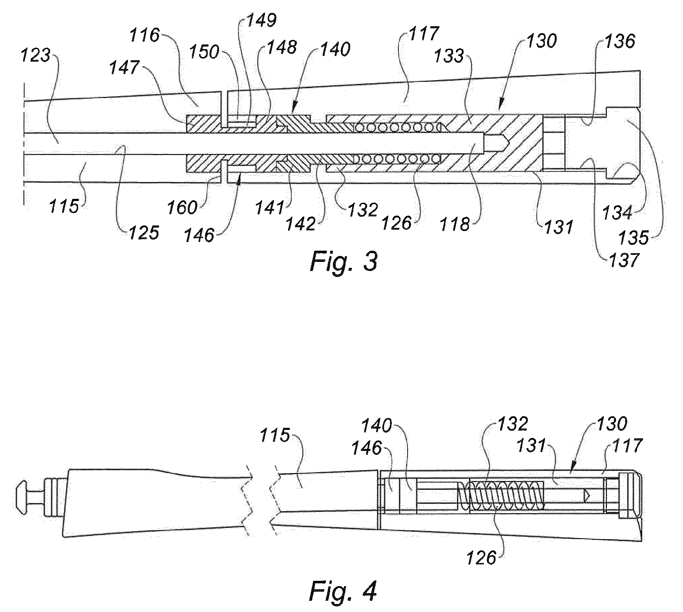

Le manchon 130 est ici monté coulissant dans l'embout 117. Dans l'exemple de réalisation de la figure 3, le fût 131 du manchon comporte ici deux nervures extérieures longitudinales (non visibles), parallèles à l'axe de la branche, et diamétralement opposées et qui sont engagées dans deux rainures correspondantes 136, 137 ménagées dans la paroi de l'alésage 133 de l'embout 117.

À l'intérieur de la jupe 132 du manchon 130 est logé un ressort de réglage 126, qui est ici un ressort de compression, et à travers lequel s'étend la portion de la coulisse 123 adjacente à son extrémité filetée 118.

L'embout 117 est monté rotatif par rapport à la partie de branche principale 115, pour régler la tension du ressort 126.

Une bague 140 est montée à l'intérieur de l'alésage 133 de l'embout 117, fixée à sa paroi par une portion antérieure élargie 141 d'un diamètre extérieur sensiblement égal au diamètre intérieur de l'alésage 133 de l'embout 117.

La fixation de la bague peut être effectuée, par exemple, par enfoncement à chaud ou simplement à force. La bague 140 est donc solidaire en rotation et en translation de l'embout 117.

La portion antérieure élargie 141 de la bague 140 se prolonge vers l'arrière par une portion tubulaire 142 de plus petite section qui peut s'introduire dans la jupe 132 du manchon 130 et y coulisser contre l'action du ressort 126. Au repos, la portion 142 se trouve à l'extérieur de la jupe 132 (figure 4).

En référence toujours à la figure 3, les deux parties de branches 115, 117 sont toutes deux montées sur un même noyau intermédiaire 146. Ce noyau comporte deux petits fûts cylindriques d'extrémité 147, 148 reliés par une partie tubulaire centrale 149 de diamètre rétréci par rapport à celui des deux fûts. Le fût 147 est monté dans la partie de branche principale 115. Il est fixe au moins en translation par rapport à la partie de branche principale. En pratique, il sera également fixe en rotation, le noyau étant, par exemple, emmanché à force dans cette partie de branche principale. Le fût 148 est monté libre en rotation dans l'embout 117. L'embout 117, à son extrémité antérieure, comporte un bourrelet annulaire transversal 150, rentré vers l'intérieur dans l'alésage 133 de l'embout 117, engagé dans l'espace annulaire entre les deux fûts 147, 148 du noyau 146. C'est grâce à l'élasticité de l'embout 117 que le bourrelet 150 a pu franchir le fût 148 du noyau 146. Le noyau 146 sert ainsi de butée en translation à l'embout 117.

Un petit écartement 160 est ménagé entre la partie de branche principale 115 et l'embout 117 qui est donc maintenu faible et constant grâce au noyau 146.

La coulisse 123 traverse le noyau 160, la bague 140 et le ressort 126.

L'embout 117 est donc monté rotatif par rapport à la partie de branche principale 115, en restant écartés l'un de l'autre d'un jeu 160 faible et constant, pour régler la tension du ressort 126.

Quand le porteur de la monture tourne l'embout 117, le manchon 130 tourne avec lui, par exemple, pour se visser sur la coulisse 123. Alors, le manchon 130, par sa jupe 132, vient s'emmancher sur la bague 140 immobilisée en translation par le noyau 146, tout en tournant autour d'elle, en comprimant le ressort 126. Bien entendu, en dévissant le manchon sur la coulisse 123, le ressort 126 se détend.

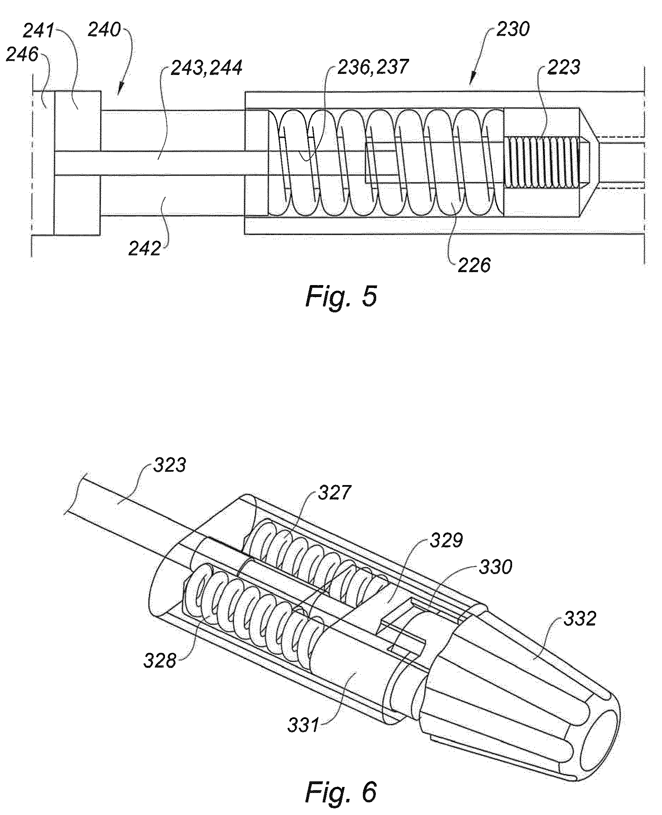

Dans la forme de réalisation de la figure 5, le manchon 230 comporte deux rainures latérales 236, 237, diamétralement opposées et s'étendant parallèlement à son axe. La bague 240, qui est ici aussi fixe en rotation dans l'embout et en appui contre le noyau 246, comporte deux nervures latérales 243, 244, diamétralement opposées et s'étendant parallèlement à son axe. Les deux nervures de la bague sont engagées dans les deux rainures du manchon. Le ressort 226 s'étend toujours entre le fond de l'alésage ménagé dans le manchon 230 et la face postérieure de la partie tubulaire 242 de plus petit diamètre de la bague 240.

Quand l'opérateur tourne l'embout et donc aussi le manchon 230, par exemple, pour le visser sur la coulisse filetée 223, le manchon 230 se rapproche de la portion élargie 241 de la bague 240, en coulissant sur la partie tubulaire 242 de plus petit diamètre et les nervures 243, 244, coulissant dans les rainures 236, 237, pour comprimer le ressort 226.

Dans la variante de réalisation de la figure 6, la coulisse 323 ne traverse plus un seul ressort mais s'étend entre deux ressorts de réglage 327, 328 qui sont en appui, non pas contre un fond annulaire de manchon, mais contre deux fonds d'un pion 329 à deux branches 330, 331 en appui contre un poussoir 332 vissé sur la coulisse 323, entraîné en rotation avec l'embout, non représenté. Le reste des composants de la branche sont similaires à ceux des autres formes de réalisation des figures 3 - 5, le fonctionnement restant identique.

## Revendications

1. Monture de lunettes comportant une face avant (1) prolongée par deux tenons latéraux (4, 5) et deux branches (2, 15) articulées sur les tenons autour d'axes d'articulation (11) de deux charnières télescopiques (20), chacune, à un élément de face avant (21) solidaire d'un tenon et un élément de branche (22), solidaire d'une branche (15), l'élément de branche (22) d'une charnière comportant une coulisse (123) articulée sur l'élément de face avant (21) et montée coulissante dans un fourreau (125) contre et sous l'action d'un ressort (126), la coulisse (123) d'une charnière de branche (20) s'étendant jusqu'à l'extrémité libre de la branche (15) de forme tubulaire et ménageant ledit fourreau (125), un manchon (130), monté sur la coulisse (123), étant monté coulissant dans l'extrémité de la branche dans laquelle s'étend également ledit ressort (126) pour qu'il coopére avec le manchon (130), **caractérisée par le fait que** la branche est réalisée en deux parties distinctes, dont une partie principale (115) et une partie d'extrémité formant embout (117) dans lequel est disposé le ressort (126), la coulisse (123) s'étendant jusque dans l'embout (117) qui est monté rotatif par rapport à la partie principale de branche (115) pour régler la tension du ressort (126).

2. Monture selon la revendication 1, dans laquelle les deux parties de branche (115, 117) sont toutes deux montées sur un même noyau (146) intermédiaire fixe en translation, par rapport à la partie de branche principale (115), dans la partie de branche prinicale (115), l'embout (117) étant monté libre en rotation sous le noyau (146) lui servant de butée en translation.

3. Monture selon la revendication 2, dans laquelle une bague (140), disposée dans l'embout (117) duquel elle est solidaire en rotation et en translation, vient en appui contre le noyau (146), le manchon (130), monté coulissant en translation dans l'embout (117), étant également agencé, pour coulisser en translation sur la bague (146).

4. Monture selon la revendication 3, dans laquelle le ressort (126) est logé dans le manchon (130), en appui contre le fond d'un alésage ménagé dans le manchon (130), d'une part, et contre la bague (140), d'autre part, le manchon (130) et la coulisse (123), traversant le noyau (146), la bague (140) et le ressort (126), coopérant par vissage.

5. Monture selon l'une des revendications 3 et 4, dans laquelle le manchon (130) est monté coulissant dans l'embout (117) et est agencé pour coulisser le long d'au moins une rainure (136, 137) de l'embout (117).

6. Monture selon l'une des revendications 3 et 4, dans laquelle le manchon (230) est monté coulissant dans l'embout et est agencé pour coulisser le long d'au moins une nervure (243, 244) de la bague (240).

7. Monture selon l'une des revendications 2 et 3, dans laquelle il est prévu deux ressorts de réglage (327, 328) s'étendant de part et d'autre de la coulisse (323).

## Patentansprüche

1. Brillengestell, umfassend eine Vorderseite (1), die durch zwei seitliche Bügelzapfen (4, 5) und zwei Bügel (2, 15), die an den Bügelzapfen um Gelenkachsen (11) von jeweils zwei Teleskopscharnieren (20) an einem vorderseitigen Element (21), das mit einem Bügelzapfen fest verbunden ist, und einem Bügelelement (22), das mit einem Bügel (15) fest verbunden ist, angelenkt sind, verlängert ist, wobei das Bügelelement (22) eines Scharniers ein Gleitstück (123) umfasst, das an dem vorderseitigen Element (21) angelenkt ist und in einer Gleithülse (125) gegen eine Feder (126) und unter Einwirkung derselben gleitend gelagert ist, wobei sich das Gleitstück (123) eines Bügelscharniers (20) bis zu dem freien Ende des röhrenförmigen Bügels (15) erstreckt und die Gleithülse (125) ausspart, wobei eine Muffe (130), die auf dem Gleitstück (123) montiert ist, in dem Ende des Bügels gleitend gelagert ist, in dem sich auch die Feder (126) erstreckt, um mit der Muffe (130) zusammenzuwirken, **dadurch gekennzeichnet, dass** der Bügel aus zwei getrennten Teilen, nämlich einem Hauptteil (115) und einem Endstückteil (117), in dem die Feder (126) angeordnet ist, ausgebildet ist, wobei sich das Gleitstück (123) bis in das Endstück (117) erstreckt, das im Verhältnis zum Bügelhauptteil (115) drehbar gelagert ist, um die Spannung der Feder (126) einzustellen.

2. Gestell nach Anspruch 1, wobei die beiden Bügelteile (115, 117) beide auf demselben, im Verhältnis zu dem Hauptbügelteil (115) verschiebungsfesten Zwischenkern (146) in dem Hauptbügelteil (115) montiert sind, wobei das Endstück (117) unter dem Kern (146), der ihm als Verschiebungsanschlag dient, frei drehbar gelagert ist.

3. Gestell nach Anspruch 2, wobei ein Ring (140), der in dem Endstück (117), mit dem er drehfest und verschiebungsfest verbunden ist, angeordnet ist, an dem Kern (146) zur Anlage kommt, wobei die Muffe (130), die in dem Endstück (117) verschiebbar gleitend gelagert ist, ebenfalls eingerichtet ist, um auf dem Ring (146) verschiebbar zu gleiten.

4. Gestell nach Anspruch 3, wobei die Feder (126) in der Muffe (130) aufgenommen ist, einerseits am Boden einer Bohrung, die in der Muffe (130) ausgespart ist, und andererseits an dem Ring (140) anliegend, wobei die Muffe (130) und das Gleitstück (123) den Kern (146) durchqueren, wobei der Ring (140) und die Feder (126) durch Verschrauben zusammenwirken.

5. Gestell nach einem der Ansprüche 3 und 4, wobei die Muffe (130) in dem Endstück (117) gleitend gelagert ist und eingerichtet ist, um in mindestens einer Nut (136, 137) des Endstücks (117) zu gleiten.

6. Gestell nach einem der Ansprüche 3 und 4, wobei die Muffe (230) in dem Endstück gleitend gelagert ist und eingerichtet ist, um in mindestens einer Rippe (243, 244) des Rings (240) zu gleiten.

7. Gestell nach einem der Ansprüche 2 und 3, wobei zwei Stellfedern (327, 328), die sich auf beiden Seiten des Gleitstücks (323) erstrecken, bereitgestellt werden.

## Claims

1. A spectacle frame including a front face (1) extended by two lateral posts (4, 5) and two branches (2, 15) articulated on the posts around hinge pins (11) of two telescoping hinges (20), each, at a front face element (21) secured to a post and a branch element (22), secured to a branch (15), the branch element (22) of a hinge including a slide (123) articulated on the front face element (21) and mounted sliding in a sheath (125) against and under the action of a spring (126), the slide (123) of a branch hinge (20) extending to the free end of the branch (15) with a tubular shape and arranging said sheath (125), a sleeve (130), mounted on the slide (123), being mounted sliding in the end of the branch in which said spring (126) also extends so that it cooperates with the sleeve (130), **characterized in that** the branch is made in two separate parts, including a main part (115) and an end part forming an end-piece (117) in which the spring (126) is arranged, the slide (123) extending into the end-piece (117), which is mounted rotating relative to the main branch part (115) to adjust the tension of the spring (126).

2. The frame according to claim 1, wherein the two branch parts (115, 117) are both mounted on a same intermediate core (146) fixed in translation, relative to the main branch part (115), in the main branch part (115), the end-piece (117) being mounted freely rotating below the core (146) acting as a translational stop for it.

3. The frame according to claim 2, wherein a ring (140), arranged in the end-piece (117) with which it is secured in rotation and translation, bears against the core (146), the sleeve (130), mounted sliding in translation in the end-piece (117), also being arranged to slide in translation on the ring (146).

4. The frame according to claim 3, wherein the spring (126) is housed in the sleeve (130), bearing against the bottom of a bore arranged in the sleeve (130), on the one hand, and against the ring (140), on the other hand, the sleeve (130) and the slide (123), traversing the core (146), the ring (140) and the spring (126), cooperating by screwing.

5. The frame according to one of claims 3 and 4, wherein the sleeve (130) is mounted sliding in the end-piece (117) and is arranged to slide along at least one slot (136, 137) of the end-piece (117).

6. The frame according to one of claims 3 and 4, wherein the sleeve (230) is mounted sliding in the end-piece and is arranged to slide along at least one rib (243, 244) of the ring (240).

7. The frame according to one of claims 2 and 3, wherein it is provided with two adjusting springs (327, 328) extending on either side of the slide (323).
